# EUROPÄISCHE PATENTANMELDUNG

(11) **EP 0 561 193 A2**
(43) Veröffentlichungstag der Anmeldung: **22.09.1993**
(21) Anmeldenummer: 93103023.3
(22) Anmeldetag: 26.02.1993
(51) Int. Cl.: A01G 7/00, A01G 13/02

(54) **Verfahren und Vorrichtung zur Wachstumsförderung von Pflanzen**

(30) Priorität: 16.03.1992 DE 4208305
(71) Anmelder: Wund, Josef, D-88045 Friedrichshafen (DE)
(72) Erfinder: Wund, Josef, D-88045 Friedrichshafen (DE)
(74) Vertreter: Engelhardt, Guido, Dipl.-Ing.

(57) **Zusammenfassung**

Damit Gras auch unter einer geschlossenen Abdeckung dauerhaft wachsen kann, ist zur Beeinflussung und Förderung des Wachstumes vorgesehen, das Gras innerhalb von 24 Stunden mittels künstlicher Lichtquellen etwa 8 bis 12 Stunden zu belichten, die Atmosphäre, der das Gras ausgesetzt ist, ständig oder intervallweise zu bewegen und/oder ständig oder von Zeit zu Zeit auszutauschen und die Kohlendioxydmenge, die von dem Gras aufgenommen wird, kontinuierlich oder in Zeitabschnitten der Atmosphäre des Raumes zuzuführen.

Gras kann somit zu jeder Jahreszeit entsprechend den natürlichen Voraussetzungen wachsen, so daß sich unter einer Abdeckung eine Rasenfläche bildet, die auch hohen Beanspruchungen standhält und die jederzeit nach Entfernung der Abdeckung zu nutzen ist.

## Beschreibung

Die Erfindung bezieht sich auf ein Verfahren sowie eine Vorrichtung zur Beeinflussung und Förderung des Wachstums von Pflanzen in einem geschlossenen Raum, inbesondere von in einem Stadion auf einer abgedeckten Spielfläche wachsendem Gras. Zur Beeinflussung des Wachstums von Pflanzen ist es allgemein bekannt, das Sonnenlicht durch geeignete Lichtquellen zu ersetzen. Beispielsweise werden in dunklen Räumen oftmals Kaltlichtlampen über mehrblättrigen Pflanzen angeordnet. In einem geschlossenen Raum wachsende Pflanzen, wie beispielsweise einen abgedeckten Rasen eines Spielfeldes, mit Hilfe derartiger Lichtquelle in entsprechender Weise zu aktivieren, damit das Spielfeld nach Entfernen der Abdeckung jederzeit benutzt werden kann, ist jedoch nicht möglich.

Da natürliches Gras innerhalb eines geschlossenen Raumes somit höchstens drei Tage gesund gehalten werden kann, war es bisher nicht zu bewerkstelligen, Rasensportarten in Gebäuden, insbesondere in überdeckten Stadien, ganz jährig in einem gebrauchsfertigen Zustand zu erhalten und diese Sportart auszuüben.

Aufgabe der Erfindung ist es daher, ein Verfahren zur Beeinflussung und Förderung des Wachstums von Gras in einem geschlossenen Raum sowie eine Vorrichtung zur Anwendung dieses Verfahrens zu schaffen, mittels denen ohne größeren Bauaufwand gewährleistet werden kann und ohne daß es einer Sonneneinstrahlung bedarf, daß die abgedeckten Pflanzen zu jeder Jahreszeit entsprechend ihren natürlichen Voraussetzungen wachsen können. Das Wachstum der Pflanzen soll hierbei vergleichmäßigt und gezielt beeinflußt werden können, vor allem aber soll erreicht werden, daß insbesondere abgedeckter Rasen, der als stark beanspruchtes Spielfeld verwendet wird, entsprechend dem Einsatzzweck einen festen Bewuchs aufweist und somit auch höheren Beanspruchungen standhält. Eine Rasenfläche soll demnach durch eine Abdeckung keinen Schaden erleiden, vielmehr sollen für das unter einer Abdeckung wachsende Gras dessen Wachstum fördernde Voraussetzungen gegeben sein, so daß eine ganzjährige Benutzung einer Spielfläche ermöglicht wird.

Das Verfahren zur Beeinflussung und Förderung des Wachstums von Gras in einem geschlossenen Raum, inbesondere von in einem Stadion auf einer abgedeckten Spielfläche wachsenden Rasen, ist dadurch gekennzeichnet, daß das Gras innerhalb von 24 Stunden mittels künstlicher Lichtquellen etwa 8 bis 12 Stunden belichtet wird, daß die Atmosphäre, der das Gras ausgesetzt ist, ständig oder intervallweise bewegt und/oder ständig oder von Zeit zu Zeit ausgetauscht wird, und daß die Kohlendioxydmenge, die von dem Gras aufgenommen wird, kontinuierlich oder in Zeitabschnitten der Atmosphäre des Raumes zugeführt wird.

Zweckmäßig ist es hierbei, auf das Gras während der Dunkelphase vorzugsweise in regelmäßigen Zeitabschnitten ein Störlicht, z.B. ein rotwelliges Licht, ca. 15 Minuten lang einwirken zu lassen, und das Gras mit einer Lichtintensität von 3000 bis 20000 Lux, vorzugsweise von 5000 bis 7000 Lux, sowie mit einem ausgeglichenen Lichtspektrum von 340 bis 700 Nanometer, vorzugsweise von 610 bis 690 Nanometer, zu bestrahlen.

Das Gras kann auf einfache Weise mit Hilfe von vorzugsweise etwa 20 cm über der Bodenoberfläche angeordneten mit breitstrahligen Reflektoren versehenen Leuchtstofflampen belichtet werden.

Angebracht ist es auch, während der Beleuchtungsphase das Gras rotwelligem Licht, naturnahem Licht und hellweißem Licht auszusetzen, wobei das naturnahe Licht etwa 30 Minuten nach dem rotwelligen Licht eingeschaltet und/oder etwa 30 Minuten vor Ablauf der Beleuchtungsphase ausgeschaltet und das hellweiße Licht etwa 90 Minuten nach dem rotwelligen Licht eingeschaltet und etwa 120 Minuten vor Ablauf der Beleuchtungsphase ausgeschaltet werden sollte.

Ferner ist es dem Wachstum dienlich, wenn das Gras einer Atmosphäre ausgesetzt wird, deren Temperatur etwa 7 bis 25 ° C, vorzugsweise 18 bis 22° C, beträgt, die Atmosphäre während der Dunkelphase auf ca. 4 bis 14° Cabgekühlt wird und die relative Luftfeuchtigkeit der Atmosphäre während der Beleuchtungsphase 50 bis 60 % beträgt; während der Dunkelphase kann die relative Luftfeuchtigkeit der Atmosphäre bis nahe an den Sättigungspunkt erhöht werden.

Der relative Feuchtegehalt des vorzugsweise wasserspeichernden Bodens, auf dem das Gras wächst, sollte auf 60 bis 70 % gehalten werden.

Der Austausch der Atmosphäre, der das Gras ausgesetzt ist, kann durch ständiges oder zeitweiliges Absaugen der Atmosphäre und/oder durch ständiges oder zeitweiliges Einblasen von Frischluft vorgenommen werden. Wird die Atmosphäre abgesaugt, wirkt sich dies besonders günstig auf das Verhalten des Rasens aus.

Dem Gras sollte innerhalb einer Stunde eine Luftmenge zugeführt werden, die um das hundertbis tausendfache größer ist als das Volumen des Raumes, in dem das Gras wächst. Auch sollte das Gras durch einen Luftstrom bewegt werden, dessen Geschwindigkeit mindestens etwa 15 cm/Sec. beträgt.

Zum Ausgleich des von dem Gras verbrauchten Kohlendioxyds kann der Atmosphäre z.B. aus Gasflaschen, als Abgas eines Verbrennungsvorganges, im Bewässerungswasser gelöst oder in ähnlicher Weise Kohlendioxyd zugegeben werden.

Die Vorrichtung zur Beeinflussung und Förderung des Wachstums von Gras in einem geschlossenen Raum, mittels der das erfindungsgemäße Verfahren anwendbar ist, ist dadurch gekennzeichnet, daß der Raum mit einer oder mehreren periodisch einschaltbaren künstlichen Lichtquellen bestückt und mit einer oder mehreren Einrichtungen, z.B. in Form von Ventilatoren, versehen ist, mittels denen die Atmosphäre, der das Gras ausgesetzt ist, ständig oder intervallweise bewegbar und/oder ständig oder von Zeit zu Zeit - auch zum Abführen des von den Pflanzen erzeugten Sauerstoffs - austauschbar ist, und daß der Raum eine oder mehrere Einrichtungen aufweist mittels denen die Kohlendioxydmenge, die von dem Gras aufgenommen wird, kontinuierlich oder in Zeitabständen der Atmosphäre zuführbar ist.

Zweckmäßig ist es hierbei, die auf das Gras einwirkenden Lichtquellen als mit breitstrahligen Reflektoren versehene, vorzugsweise etwa 20 cm über dem Boden angeordnete Leuchtstofflampen auszubilden, den Boden des Raumes beispielsweise mittels durchgehender Spritzrohre oder dgl. bedarfsgesteuert zu bewässern und die in den Raum einbringbare Luft z. B. mittels den Ventilatoren zugeordneten Heizeinrichtungen im Bedarfsfall anzuwärmen.

Mittels dem erfindungsgemäßen Verfahren bzw. der vorschlagsgemäß ausgebildeten Vorrichtung ist es ohne Schwierigkeiten möglich, das Wachstum von in einem geschlossenen Raum angeordneten Pflanzen, insbesondere eines vollständig abgedeckten Rasens eines Spielfeldes derart zu beeinflussen und zu fördern, daß vor allem Gras unter optimalen Bedingungen sich entwickeln und ganzjährig wachsen kann. Werden nämlich die Beleuchtung, die Umgebungstemperatur, die Wasserversorgung, die Luftfeuchtigkeit, die Luftbewegung sowie die Kohlendioxydversorgung in der angegebenen Weise eingestellt und geregelt, so können auch einblättrige Pflanzen bei nahezu stets gleichmäßigen und auf diese abgestellte Bedingungen ohne ungünstige äußere Einflüsse gedeihen.

Eine z.B. durch befahrbare und multifunktionell nutzbare Bottenplatte abgedeckte Rasenfläche bleibt somit, da die Graspflanzen auch ohne Sonnenbestrahlung wachsen können, erhalten und ist zu jeder Jahreszeit nach Entfernen der Platten bespielbar. Von besonderer Bedeutung ist hierbei, daß das Kohlendioxyd, das von den Pflanzen in einer Größenordnung von 1,3 bis 2,65 g/m² und Stunde verbraucht wird, in einem ausreichenden Maße durch Luftwechsel oder durch Zugabe ersetzt wird. Pflanzen können somit unter nahezu natürlichen Bedingungen und im Rhytmus eines Tages wachsen, so daß deren Wachstum durch die Abdeckung nicht beeinträchtigt ist.

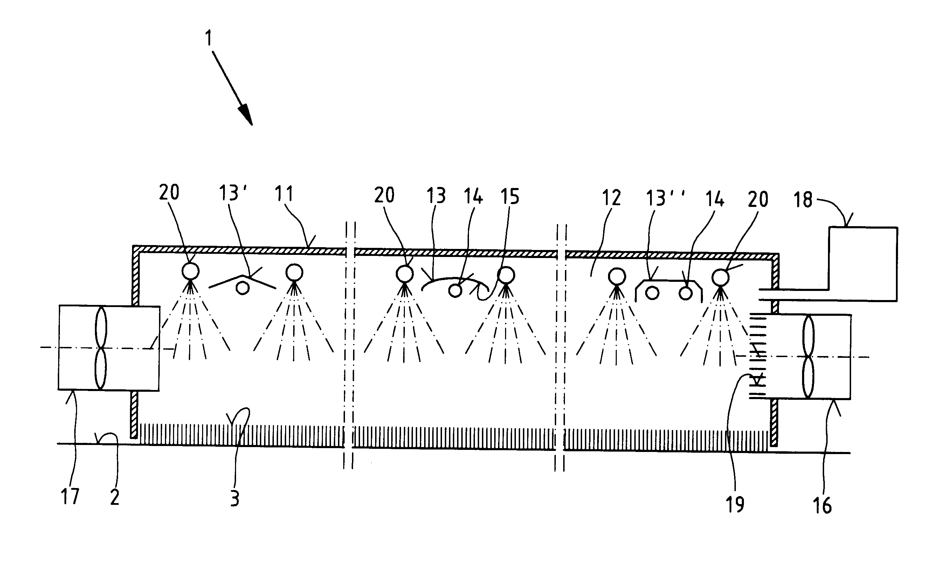

In der Zeichnung ist ein Ausführungsbeispiel der gemäß der Erfindung ausgebildeten Vorrichtung zur Beeinflussung und Förderung des Wachstums von Gras in einem geschlossenen Raum, die zur Anwendung des erfindungsgemäßen Verfahrens dient, dargestellt, das nachfolgend im einzelnen erläutert ist.

Durch eine mit 1 bezeichnete schematisch dargestellte Vorrichtung ist das auf dem Boden 2 wachsende Gras nahezu vollständig abgedeckt, so daß ein geschlossener Raum 11 mit einer eigenen Atmosphäre 12 geschaffen ist. Damit aber dennoch das durch die Vorrichtung 1 abgedeckte Gras 3 unter nahezu natürlichen Lebensbedingungen wachsen kann, ist die Vorrichtung 1 mit Lichtquellen 13, 13', 13", die unterschiedlich ausgebildet sein können und jeweils aus einer Lichtquelle in Form einer Leuchtstoffröhre 14 und einem breitstrahligen Reflektor 15 bestehen, bestückt. Außerdem ist der Raum 11 belüftbar, in die Atmosphäre 12 kann Kohlendioxyd eingebracht und der Boden 2 kann bewässert werden.

Dies wird in der Weise bewerkstelligt, daß die Vorrichtung 1 mit Ventilatoren 16 und 17 versehen ist, wobei mittels des Ventilators 16 Frischluft in den Raum 11 eingeblasen und/oder durch den Ventilator 17 die Atmosphäre 12 auch zum Abführen des von den Pflanzen erzeugten Sauerstoffs abgesaugt werden kann. Da dem Ventilator 16 eine Heizeinrichtung 19 zugeordnet ist, kann die eingebrachte Frischluft entsprechend angewärmt werden. Des weiteren ist der Vorrichtung 1 eine Einrichtung 18 zur Einbringung von Kohlendioxyd in die Atmosphäre 12, um das von dem Gras 3 verbrauchte Kohlendioxyd zu ersetzen, zugeordnet, ferner weist die Vorrichtung 1 mehrere Spritzrohre 20 auf, mittels denen der Boden 2 bewässert werden kann. Die Atmosphäre 12, denen das Gras 3 ausgesetzt ist, kann somit bewegt und eingestellt werden, so daß das Gras unter optimalen Bedingungen wachsen kann.

Die Vorrichtung 1, durch die das Wachstum des Grases 3 günstig beeiflußt und gefördert wird, so daß dieses dauernd wachsen kann, kann derart gestaltet sein, daß diese befahren und multifunktional zu nutzen ist. In einem Stadion, das mit einer solchen Vorrichtung ausgestattet ist, können demnach nicht nur Rasensportarten auf dem Gras 3 ausgeübt werden, sondern auf der in entsprechender Weise auszubildenden Vorrichtung 1 können z.B. Veranstaltungen durchgeführt werden, für die eine glatte Bodenfläche erforderlich ist.

## Patentansprüche

1. Verfahren zur Beeinflussung und Förderung des Wachstums von Pflanzen in einem geschlossenen Raum, inbesondere von in einem Stadion auf einer abgedeckten Spielfläche wachsendem Gras,
dadurch gekennzeichnet,
daß das Gras innerhalb von 24 Stunden mittels künstlicher Lichtquellen etwa 8 bis 12 Stunden belichtet wird,
daß die Atmosphäre, der das Gras ausgesetzt ist, ständig oder intervallweise bewegt und/oder ständig oder von Zeit zu Zeit ausgetauscht wird, und
daß die Kohlendioxydmenge, die von dem Gras aufgenommen wird, kontinuierlich oder in Zeitabschnitten der Atmosphäre des Raumes zugeführt wird.

2. Verfahren nach Anspruch 1, dadurch gekennzeichnet,
daß auf das Gras während der Dunkelphase vorzugsweise in regelmäßigen Zeitabschnitten ein Störlicht von ca. 15 Minuten Dauer einwirkt.

3. Verfahren nach Anspruch 2, dadurch gekennzeichnet,
daß auf das Gras während der Dunkelphase als Störlicht ein rotwelliges Licht einwirkt.

4. Verfahren nach einem oder mehreren der Ansprüche 1 bis 3,
dadurch gekennzeichnet,
daß das Gras mit einer Lichtintensität von 3000 bis 20000 Lux, vorzugsweise von 5000 bis 7000 Lux, bestrahlt wird.

5. Verfahren nach einem oder mehreren der Ansprüche 1 bis 4,
dadurch gekennzeichnet,
daß das Gras mit einem ausgeglichenen Lichtspektrum von 340 bis 700 Nanometer, vorzugsweise von 610 bis 690 Nanometer, bestrahlt wird.

6. Verfahren nach einem oder mehreren der Ansprüche 1 bis 5,
dadurch gekennzeichnet,
daß das Gras mit Hilfe von vorzugsweise etwa 20 cm über der Bodenoberfläche angeordneten mit breitstrahligen Reflektoren versehenen Leuchtstofflampen belichtet wird.

7. Verfahren nach einem oder mehreren der Ansprüche 1 bis 6,
dadurch gekennzeichnet,
daß während der Beleuchtungsphase das Gras rotwelligem Licht, naturnahem Licht und hellweißem Licht ausgesetzt wird.

8. Verfahren nach Anspruch 7, dadurch gekennzeichnet,
daß während einer Beleuchtungsphase das naturnahe Licht etwa 30 Minuten nach dem rotwelligen Licht eingeschaltet und/oder etwa 30 Minuten vor Ablauf der Beleuchtungsphase ausgeschaltet wird.

9. Verfahren nach Anspruch 7 oder 6, dadurch gekennzeichnet,
daß während einer Beleuchtungsphase das hellweiße Licht etwa 90 Minuten nach dem rotwelligen Licht eingeschaltet und etwa 120 Minuten vor Ablauf der Beleuchtungsphase ausgeschaltet wird.

10. Verfahren nach einem oder mehreren der Ansprüche 1 bis 9
dadurch gekennzeichnet,
daß das Gras einer Atmosphäre ausgesetzt wird, deren Temperatur etwa 7 bis 25 ⁰ C, vorzugsweise 18 bis 22° C, beträgt.

11. Verfahren nach einem oder mehreren der Ansprüche 1 bis 10,
dadurch gekennzeichnet,
daß die Atmosphäre, der das Gras ausgesetzt ist, während der Dunkelphase auf ca. 4 - 14° C abgekühlt wird.

12. Verfahren nach einem oder mehreren der Ansprüche 1 bis 11,
dadurch gekennzeichnet,
daß das Gras einer Atmosphäre ausgesetzt wird, deren relative Luftfeuchtigkeit während der Beleuchtungsphase 50 bis 60 % beträgt.

13. Verfahren nach Anspruch 12, dadurch gekennzeichnet,
daß während der Dunkelphase die relative Luftfeuchtigkeit der Atmosphäre bis nahe an den Sättigungspunkt erhöht wird.

14. Verfahren nach einem oder mehreren der Ansprüche 1 bis 13,
dadurch gekennzeichnet,
daß der relative Feuchtegehalt des vorzugsweise wasserspeichernden Bodens, auf dem das Gras wächst, auf 60 bis 70 % gehalten wird.

15. Verfahren nach einem oder mehreren der Ansprüche 1 bis 14,
dadurch gekennzeichnet,
daß der Austausch der Atmosphäre, der das Gras ausgesetzt ist, durch ständiges oder zeitweiliges Absaugen der Atmosphäre und/oder durch ständiges oder zeitweiliges Einblasen von Frischluft vorgenommen wird.

16. Verfahren nach Anspruch 15,
dadurch gekennzeichnet,
daß innerhalb einer Stunde dem Gras eine Luftmenge zugeführt wird, die um das hundertbis tausendfache größer ist als das Volumen des Raumes, in dem das Gras wächst.

17. Verfahren nach Anspruch 15 oder 16,
dadurch gekennzeichnet,
daß das Gras durch einen Luftstrom bewegt wird, dessen Geschwindigkeit mindestens 15 cm/Sec. beträgt.

18. Verfahren nach einem oder mehreren der Ansprüche 15 bis 17,
dadurch gekennzeichnet,
daß zum Ausgleich des von dem Gras verbrauchten Kohlendioxyds der Atmosphäre Kohlendioxyd zugegeben wird.

19. Verfahren nach Anspruch 18,
dadurch gekennzeichnet,
daß das Kohlendioxyd der Atmosphäre gasförmig, z.B. aus Gasflaschen, als Abgas eines Verbrennungsvorganges, im Bewässerungswasser gelöst oder in ähnlicher Weise zugegeben wird.

20. Vorrichtung zur Beeinflussung und Förderung des Wachstums von Pflanzen in einem geschlossenen Raum, insbesondere von in einem Stadion auf einer abgedeckten Spielfläche wachsendem Gras
dadurch gekennzeichnet,
daß der Raum (11) mit einer oder mehreren periodisch einschaltbaren künstlichen Lichtquellen (13, 13', 13") bestückt und mit einer oder mehreren Einrichtungen, z. B. in Form von Ventilatoren (16, 17) versehen ist, mittels denen die Atmosphäre (12), der das Gras (3) ausgesetzt ist, ständig oder intervallweise bewegbar und/oder ständig oder von Zeit zu Zeit austauschbar ist, und daß der Raum (11) eine oder mehrere Einrichtungen (18) aufweist, mittels denen die Kohlendioxydmenge, die von dem Gras (3) aufgenommen wird, kontinuierlich oder in Zeitabständen der Atmosphäre (12) zuführbar ist.

21. Vorrichtung nach Anspruch 20, dadurch gekennzeichnet,
daß die auf das Gras (3) einwirkenden Lichtquellen (13, 13', 13") als mit breitstrahligen Reflektoren (15) versehene, vorzugsweise etwa 20 cm über dem Boden (2) angeordnete Leuchtstofflampen (14), ausgebildet sind.

22. Vorrichtung nach Anspruch 20 oder 21,
dadurch gekennzeichnet,
daß der Boden (2) des Raumes (11) beispielsweise mittels durchgehender Spritzrohre (20) oder dgl. bewässerbar ist.

23. Vorrichtung nach einem oder mehreren der Ansprüche 20 bis 22,
dadurch gekennzeichnet,
daß die in den Raum (11) einbringbare Luft z. B. mittels den Ventilatoren (16, 17) zugeordneten Heizeinrichtungen (19) erwärmbar ist.
